# EUROPEAN PATENT SPECIFICATION

(11) **EP 3 204 699 B1**
(45) Date of publication and mention of the grant of the patent: **25.09.2019**
(21) Application number: 15849793.3
(22) Date of filing: 07.10.2015
(51) Int. Cl.: F24S 25/35, H02S 20/23, E04D 13/18, F24S 25/00, F24S 25/33

(54) **MOUNTING BAR, SYSTEM FOR MOUNTING A SOLAR PANEL AND METHOD FOR MOUNTING AT LEAST TWO SOLAR PANELS**
MONTAGESCHIENE, SYSTEM ZUM MONTIEREN EINES SOLARPANEELS UND VERFAHREN ZUM MONTIEREN MINDESTENS ZWEI SOLARPANEELE
BARRE DE MONTAGE, SYSTÈME POUR MONTER UN PANNEAU SOLAIRE ET PROCÉDÉ POUR MONTER AU MOINS DEUX PANNEAUX SOLAIRES

(30) Priority: 09.10.2014 SE 1451214
(43) Date of publication of application: 16.08.2017
(73) Proprietor: Solibro Research AB, 756 51 Uppsala (SE)
(72) Inventor: NERETNIEKS, Peter, S-187 77 Täby (SE)
(74) Representative: Brann AB
(86) International application number: PCT/SE2015/051064
(87) International publication number: WO 2016/056985

(56) References cited:
- EP-A1- 2 679 929
- EP-A2- 2 256 821
- WO-A2-2009/074135
- CN-U- 202 678 337
- DE-A1-102007 059 650
- DE-U1-202008 009 241
- DE-U1-202009 004 217
- FR-A1- 2 931 855
- FR-A1- 2 949 799
- FR-A1- 2 950 641
- KR-A- 20110 116 419
- US-A1- 2011 252 724

## Description

### TECHNICAL FIELD

The present invention relates to an elongated mounting bar for a solar panel, an elongated mounting rail for a solar panel, a system for mounting a solar panel and a method for mounting at least two solar panels.

### BACKGROUND

The mounting of solar panels is generally a cumbersome and time consuming process, and when mounting on a roof, each individual panel often needs to be mounted by an operator present on the roof itself, thus requiring considerable stability to prevent accidents or damage to the roof or structure, and if the panels are not securely fastened to provide a leak tight surface, water and dirt can penetrate and also possibly damage a building or surface underneath. The solar panels can generally either be mounted on an existing roof or serve as a roof for a building themselves.

A number of systems and methods for mounting solar panels are known in the art, among them US2011252724A, FR2931855A. and. US5274978A. None of them provide satisfactory solutions to the problems presented above.

Document DE 10 2007 059 650 A1 describes an elongated solar panel mounting bar according to the preamble of claim 1.

### GENERAL DESCRIPTION OF THE INVENTION

The object of the present invention is to overcome or at least to minimize the problems described above. This is achieved through a mounting bar, a mounting rail, a system, and a method for mounting solar panels as disclosed in the appended independent claims.

The mounting bar comprises a longitudinal surface between a first end and a second end of the solar panel mounting bar, wherein a first groove in the longitudinal surface extends diagonally from a position close to an upper extremity of the first end towards a position close to a lower extremity of the second end, and the first groove ends before the second end, characterized in that the first groove opens into the first end, and the second end comprises a second groove in the longitudinal surface between said first groove and the upper extremity of the second end, wherein the second groove overlaps the first groove and opens into the second end.

Thereby, a first solar panel can be mounted by sliding into the first groove, and a second solar panel can be mounted by sliding into the second groove, such that the first solar panel overlaps the second solar panel. Thus, a reliable seal can be provided to prevent water from penetrating between the first and second solar panel.

A solar panel mounted on two mounting bars together forms a solar panel assembly for mounting on mounting rails and as part of a mounting system as described herein.

According to an aspect of the invention, the longitudinal surface of the solar panel mounting bar is essentially planar. Thereby, the creation of grooves in the mounting bar is facilitated.

According to another aspect of the invention, the solar mounting bar comprises a quadratic cross-sectional profile. Thereby, the holding of a mounting bar by a mounting rail with a corresponding shape of a holding element can be performed in an easy and efficient manner, and high performance with regards to stability can be achieved by the mounting bar.

The invention further comprises an elongated mounting bar further comprising an elongated mounting rail for a solar panel, according to a preferred embodiment, that comprises, a holding element extending from the base, and configured to at least partly extend around a perimeter of a cross-section of an elongated mounting bar, and allowing the elongated mounting bar to slide-in from an end of the elongated mounting rail and in a longitudinal direction of the elongated mounting rail. Thereby, a solar panel assembly with mounting bars can be slid into place in the holding element and be held in a secure and stable manner.

According to an aspect of the invention, the mounting rail further comprises a middle section protruding from the base, such that said middle section connects said holding element to said base. Furthermore, said middle section can have a quadratic profile. Thereby, high stability and strength of the mounting rail can be achieved.

According to a further aspect of the invention, the middle section comprises a quadratic hollow profile. Thereby, the amount of material required for manufacturing the mounting rail can be kept low, which allows for a cost efficient manufacture, and the stability and strength can still be maintained.

According to yet another aspect of the invention, the quadratic hollow profile is configured for receiving a connection element provided for extending the elongated mounting rail. Thereby, two mounting rails can be connected by the connection element in a stable and reliable manner.

According to a further aspect of the invention, the quadratic hollow profile is provided with an internal raised edge and the connection element is an L-shaped bar, said internal raised edge being configured for locking an L-shaped bar provided for extending the elongated mounting rail. Thereby, two mounting rails can be joined together in an efficient manner and allow for a secure fastening.

According to yet another aspect of the invention, the base of the mounting rail comprises a external raised edge, at a distance from the middle section so that a channel is formed between said external raised edge and the middle section. Thereby, any moisture that manages to enter the solar panel mounting system can be allowed to flow along the mounting rails and exit the system without risking damage to the roof or structure upon which the solar panels are mounted.

According to a further aspect of the invention, the holding element is configured to extend at least partly around a quadratic mounting bar, the holding element further comprising a locking flange configured to lock the mounting bar in a lateral direction of the elongated mounting rail. Thereby, the solar panel assembly can be held securely in place even if the solar panel itself should break.

The invention further comprises a system for mounting a solar panel, having at least two elongated mounting bars for a solar panel, comprising a longitudinal surface between a first end and a second end of the solar panel mounting bar, wherein a first groove in the longitudinal surface extends diagonally from a position close to an upper extremity of the first end towards a position close to a lower extremity of the second end, and the first groove opens into the first end and ends before the second end, and the second end comprises a second groove in the longitudinal surface between said first groove and the upper extremity of the second end, wherein the second groove overlaps the first groove and opens into the second end; and at least two solar panel mounting rails elongated mounting rail for a solar panel, comprising: a base configured to be attached to a plan surface, a holding element extending from the base, and configured to at least partly extend around a perimeter of a cross-section of the elongated mounting bar, and allowing the elongated mounting bar to slide-in from an end of the elongated mounting rail and in a longitudinal direction of the elongated mounting rail. The mounting system thus benefits from the advantages described above with reference to the mounting bar and the mounting rails, and also provides a complete system for mounting and handling the solar panel assemblies on a structure using the mounting rails.

According to an aspect of the invention, the first groove of a first mounting bar and the second groove of a second mounting bar are configured in such a way that an elongated groove is created when placing the first mounting bar adjacent to the second mounting bar in a longitudinal direction, said elongated groove comprising said first groove of the first mounting bar and said second groove of the second mounting bar. Thereby, a solar panel can be held in a secure manner in the elongated groove and a desired placement and slant of the solar panel in relation to the mounting bar and the mounting rails can be achieved.

Furthermore, the invention comprises a method for mounting at least two solar panels, comprising: mounting at least two solar panel mounting rails on a plane surface, at a predetermined distance, such that a column for solar panels is formed; mounting each of the at least two solar panels in a corresponding first and a second elongated mounting bar for a solar panel, forming at least two solar panel assemblies; wherein each elongated solar panel mounting bar comprises a longitudinal surface between a first end and a second end of the elongated solar panel mounting bar, wherein a first groove in the longitudinal surface extends diagonally from a position close to an upper extremity of the first end towards a position close to a lower extremity of the second end,and the first groove opens into the first end and ends before the second end, and the second end comprises a second groove in the longitudinal surface between said first groove and the upper extremity of the second end, wherein the second groove overlaps the first groove and opens into the second end; and wherein each of the elongated solar panel mounting rails comprises a base configured to be attached to a plan surface, and a holding element extending from the base, and the elongated solar panel mounting rail further being configured to at least partly extend around a perimeter of a cross-section of an elongated solar panel mounting bar, and allowing the elongated solar panel mounting bar to slide-in from an end of the elongated solar panel mounting rail and in a longitudinal direction of the elongated solar panel mounting rail; sliding in one of the at least two solar panel assemblies onto the mounted at least two solar panel mounting rails from one end of the at least two solar panel mounting rails; and sliding in the other of the at least two solar panel assemblies into the at least two solar panel mounting rails, such that one end of the solar panel of the other solar panel assembly is inserted into a corresponding second groove in the first and second mounting bar of the already mounted solar panel assembly, whereby the solar panels of the at least two solar panel assemblies at least partly overlap each other. Thereby, the solar panel assemblies can be mounted on the roof or other structure in an efficient and beneficial manner, having the benefits and advantages described with regard to the mounting bars, mounting rails and mounting system for the solar panels. Further advantages and benefits of the present invention will become readily apparent to the person skilled in the art in view of the drawings and the detailed description below.

### BRIEF DESCRIPTION OF THE DRAWINGS

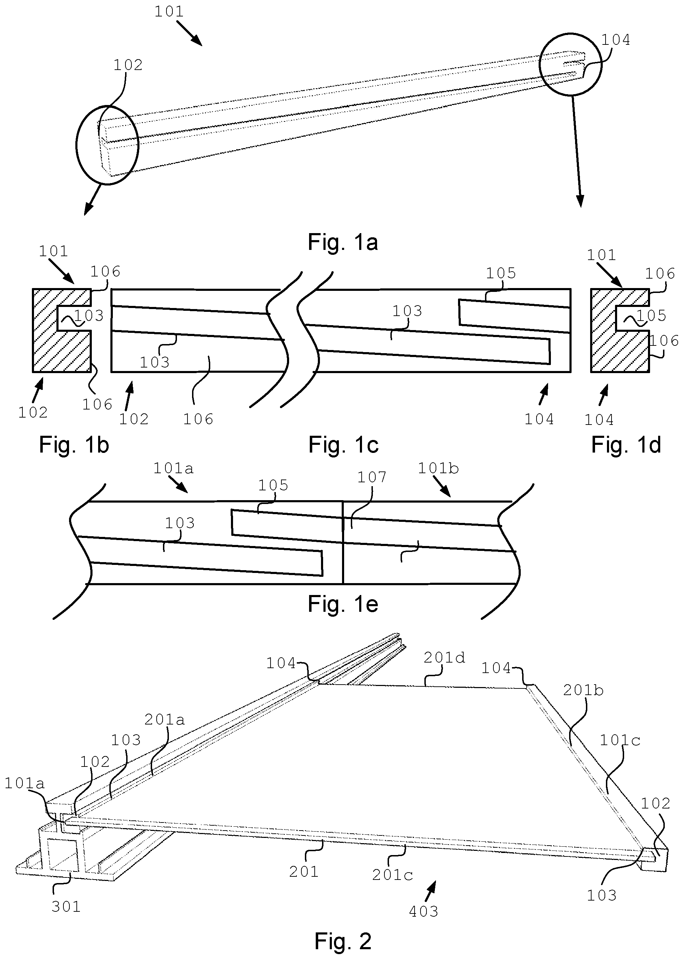

The invention will now be described in more detail with reference to the appended drawings, wherein
Fig. 1a shows a perspective view of an elongated mounting bar for a solar panel according to a preferred embodiment of the invention;
Fig. 1b shows a cross-sectional view of the mounting bar of
Fig. 1a from a first end of the mounting bar;
Fig. 1c shows a planar view of the mounting bar of Fig. 1a;
Fig. 1d shows a cross-sectional view of the mounting bar of
Fig. 1a from a second end of the mounting bar;
Fig. 1e shows two mounting bars placed so that a second end of one mounting bar abuts a first end of the other mounting bar;
Fig. 2 shows a perspective view of a first and a second mounting bar with a solar panel mounted therebetween, and with the first mounting bar being mounted in a mounting rail according to the invention;
Fig. 3 shows a perspective view of the mounting rail for a solar panel according to a preferred embodiment of the invention; and
Fig. 4 shows a schematic perspective view of a building with a number of solar panels mounted on mounting rails and mounting bars according to the invention, to further illustrate the mounting system and the method for mounting the solar panels.

### DETAILED DESCRIPTION OF EMBODIMENTS OF THE INVENTION

Fig. 1a-1d shows an elongated mounting bar 101 for a solar panel according to a preferred embodiment of the present invention, with a first end 102 and a second end 104. Along the mounting bar 101 from the first end 102 to the second end 104 is a longitudinal surface 106 with a first groove 103 that extends essentially diagonally along the mounting bar 101 from a position close to an upper part or extremity of the first end 102 to a position close to a lower part or extremity of the second end 104. The first groove 103 opens into the first end 102 but ends at the second end 104, so that a solar panel can slide along the first groove 103 from the first end 102 towards the second end 104 and rest against an end of the first groove 103. In the longitudinal surface 106, there is also a second groove 105 that extends from the second end 104 and towards an interior of the mounting bar 101 in such a way that the second groove 105 is located between the first groove 103 and an upper part or extremity of the second end 104. Thus, the second groove 105 overlaps a part of the first groove 103 and opens into the second end 104 but ends in the interior of the mounting bar 101.

Fig. 1b shows the mounting bar 101 from the first end 102, i.e. from the left hand side of Fig. 1c. The first groove 103 can be seen in the upper part of the mounting bar 101.

Similarly, Fig. 1d shows the mounting bar 101 from the second end 104, i.e. from the right hand side of Fig. 1c, with the second groove 105 also in the upper part of the mounting bar 101, but at the second end 104 rather than the first end 102. The mounting bar 101 has a quadratic cross sectional profile and this shape is advantageous when the mounting bar 101 is placed in a mounting rail, as will be described further below. The term quadratic, as used herein, is understood to encompass a square shape as well as a rectangular shape. The longitudinal surface 106 of the mounting bar 101 is preferably an essentially planar surface.

Fig. 1e shows two mounting bars 101a, 101b placed together so that the second end 104 of a first mounting bar 101a abuts the first end 102 of a second mounting bar 101b. In this position, the second groove 105 of the first mounting bar 101 connects to the first groove 103 of the second mounting bar so that they together form an extended groove 107 that runs smoothly from one end in the first mounting bar 101a to another end in the second mounting bar 101b. The extended groove 107 thus runs from a top end of the first mounting bar 101a to a bottom end of the second mounting bar 101b, so that an object held in the extended groove 107 would not only be held securely when the first and second mounting bars 101a, 101b are fixed together as shown by Fig. 1e, but also that said object would be held at an angle when the mounting bars 101a, 101b are placed horizontally.

Fig. 2 shows a first mounting bar 101a and a third mounting bar 101c together with a solar panel 201 that is mounted between them, forming a solar panel assembly 403. A first edge 201a of the solar panel 201 is placed in the first groove 103 of the first mounting bar 101a and a second edge 201b of the solar panel 201 opposite to the first edge 201a is mounted in the first groove 103 of the third mounting bar 101c so that the solar panel 201 is held between said first and third mounting bars 101a, 101c. Thanks to the diagonal extension of the first groove along the mounting bar, as described above, the solar panel 201 is slanted so that a first end 201c of the solar panel 201 is higher than a second end 201d of the solar panel 201 when the mounting bars 101a, 101c are held horizontally. The first end 201c of the solar panel 201 extends from the first and third mounting bars 101a, 101c, since the first grooves 103 are open to the first end 102 of the mounting bars 101a, 101c.

It is to be noted that the solar panel 201 in order to be secured would require a second mounting bar 101b placed adjacent to the first mounting bar 101a and a fourth mounting bar 101d placed adjacent to the third mounting bar 101c, so that the first and second edge 201a, 201b of the solar panel 201 extend into the second grooves 105 of the second and fourth mounting bars 101b, 101d, respectively, and hold the solar panel 201 in the extended grooves 107 to prevent any movement of the solar panel 201 along the mounting bars 101.

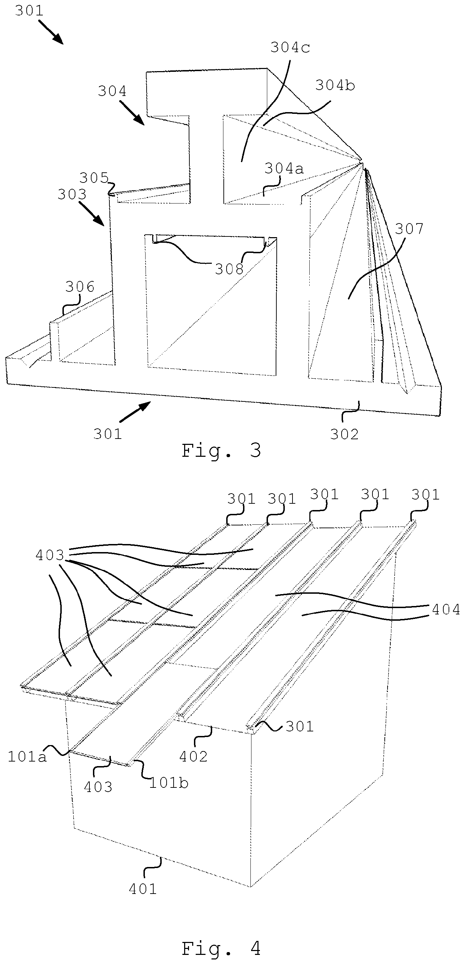

Fig. 2 also shows an elongated mounting rail 301 by which the first mounting bar 101 is slide ably held. When mounting the solar panels 201 on roof or similar structure, mounting rails 301 are fixed to the roof as will be described further below, and the mounting bars 101 holding the solar panel 201 are slid along the mounting rails 301 until a desired position for the solar panels 201 is reached. Thereby, a plurality of solar panels 201 can be mounted on a roof without requiring a person present on the roof to place the solar panels 201 in suitable positions and fixate them in their desired places. Rather, a person can remain beside the roof and slide the solar panels 201 one by one into place, as will be describe further below with reference to Fig. 4.

Fig. 3 shows the mounting rail 301 according to a preferred embodiment of the invention in more detail with a base 302, a middle section 303 extending from said base 302 and a holding element 304 with suitable dimensions to allow the mounting bar 101 of Fig. 1 and 2 to be securely held. The holding element 304 extends from the middle section 303 and comprises a lower surface 304a and an upper surface 304b between which the mounting bar 101 can be held. Also provided is a back surface 304c, as well as a locking flange 305 for preventing the mounting bar 101 from sliding away from the mounting rail 301 in the direction away from the back surface 304c. The locking flange 305 together with the upper surface 304b also serve to prevent the mounting bar 101 and the solar panel 203 from falling down towards the base 301 if the panel 203 should break. It is to be noted, however, that the holding element 304 can also extend directly from the base 302, without requiring a middle section 303 between them. If no middle section 303 is present on the mounting rail, a compact mounting rail 301 is achieved, where the solar panel assemblies in a mounted state are located closer to an underlying roof or other structure.

In order to mount a mounting bar 101 on the mounting rail 301, the second end 104 of a mounting bar 101 is inserted in the holding element 304 to abut against the lower surface 304a and the mounting bar 101 is then slid along said lower surface 304a in a longitudinal direction along the mounting rail 301. The lower surface 304a, back surface 304c and upper surface 304b thus envelop the mounting bar 101 as shown by Fig. 2 and allow a movement of the mounting bar 101 in the longitudinal direction, and the locking flange 305 serves to prevent the mounting bar 101 from moving in a lateral direction away from the back surface 304c so that the mounting bar 101 can escape from the holding element 304 altogether. When a solar panel 203 is mounted on a first and a second mounting bar 101a, 101b, and the mounting bars 101a, 101b are slid into place along a first and second mounting rail, as will be described further below, the solar panel 203 itself serves to prevent the mounting bars 101a, 101b from moving in the lateral direction, but if the solar panel 203 should break or one of the mounting rails 301 itself should move unexpectedly in the lateral direction, the locking flange 305 holds the mounting bars 101 in place and prevents a separation of the mounting bar 101 and the mounting rail 301.

Also shown in Fig. 3 is an external raised edge 306 extending from the base 302 of the mounting rail 301 so that a channel 307 that runs longitudinally along the middle section 303 is formed. If any moisture should penetrate the solar panel 201, mounting bar 101 and mounting rail 301 combination, for instance by seeping between the solar panel 203 and the mounting bar 101 or between the mounting bar 101 and the mounting rail 301, this moisture would be collected in the channel 307 and allowed to flow along the mounting rail 301 towards a lower end of a roof or other structure on which the mounting rail 301 is mounted. At said lower end, the water formed from said moisture can exit the mounting system and thereby water damage to a roof below the mounting rails 301 can largely be prevented.

The middle section 303 is preferably a hollow profile to provide a cost effective mounting rail 301 with a low weight to allow for easy handling and avoid unnecessary pressure against the roof. Further, by inserting a connection element (not shown) into the hollow space, the mounting rail 301 can be extended and a second mounting rail 301 can be mounted on the first by allowing the connection element to protrude into the hollow space of both mounting rails 301 when they abut each other. In one embodiment, at least one and preferably two internal raised edges 308 are provided on an inside of the middle section 303 and run along at least a part of the mounting rail 301. The connection element can in this embodiment be an L-shaped bar that is held in place by the internal raised edge 308 together with two surfaces of the hollow profile, but it is to be noted that other extension or locking means can also be used to connect two mounting rails to each other, or indeed that the mounting rails are only fixed in relation to the roof and are thereby held in a suitable position in relation to each other as well.

Fig. 4 shows a plurality of mounting rails 301 mounted on a roof 402 of a building 401. A number of solar panels 203 are mounted on the roof 402 but there is also space for an additional number of solar panels 203 that have not yet been mounted, and one of the solar panels 203 is shown during the mounting as it is slid into place along two of the mounting rails 301.

The mounting of the solar panels according to the method of the invention will now be described in detail.

The solar panel assembly 403 is formed by inserting a solar panel 203 into the first grooves 103 of a first mounting bar 101a and a second mounting bar 101b as described above with reference to Fig. 2, and the solar panel is fixated in relation to the mounting bars 101a, 101b by an adhesive or similar fixation method. Alternatively, the solar panel can be fixated by providing dimensions of the grooves 103, 105 so that the fitting of the solar panel is tight enough to hold the panel by squeezing or by friction.

On a suitable plane surface such as a roof of a building, a plurality of mounting rails 301 are mounted at a predetermined distance from each other so that a number of columns 404 are created. If the distance from an upper end to a lower end of the roof is larger than a length of the mounting rails 301, a the mounting rails 301 can be joined together by the use of a connection element as described above. Preferably, a connection element is inserted into the middle section 303 of a mounting rail 301 and fixated, for instance through the use of screws, and a second mounting rail 301 is placed adjacently so that the connection element extends into the middle section 303 of the second mounting rail 301 as well, before being fixated in a similar manner. The mounting rails 301 can be mounted on the roof by any suitable method as is well known in the art.

After the mounting rails 301 have been mounted on the roof 402, a first solar panel assembly 403 is inserted from a lower end of the roof 402 by inserting the second end 104 of a first and a second mounting bar 101a, 101b in the holding element 304 of two adjacent mounting rails 301. The solar panel assembly 403 is then slid along the mounting rails 301 until the first end 102 of the mounting bars 101a, 101b approach a lower end of the mounting rails 301. Then, a second solar panel assembly 403 is mounted in a similar manner so that the second solar panel assembly 403 abuts the first solar panel assembly 403, and the mounting bars 101 of the second solar panel assembly 403 receive the edges of the solar panel in their second grooves 105, as described above. Thus, when said two solar panel assemblies 403 have been slid into place along the mounting rails, the solar panels 203 of the solar panel assemblies 403 are arranged to partially overlap, thanks to the overlapping of the first groove 103 and the second groove 105. By mounting the solar panel assemblies 403 in such a way that the second ends 104 of the mounting bars 101 are closer to the upper end of the roof 402 and the first ends 102 of the mounting bars 101 are closer to the lower end of the roof 402, a solar panel 203 closer to the upper end of the roof 402 will overlap on top of a solar panel 203 closer to the lower end of the roof 402, similar to the mounting of ordinary roof panels, as is well known in the art. Thereby, rain will be allowed to pour along the solar panels essentially without penetrating between the solar panels, since the first end 201c of each solar panel 203 will be protected by the second end 201d of an adjacent solar panel 203, with the exception of the solar panel 203 closest to a top of the roof 402.

Thus, all of the solar panel assemblies 403 can be mounted by a person standing below the roof 402, by sliding each solar panel assembly 403 up along the mounting rails 301 and by using each additional solar panel assembly 403 after the first to push the solar panel assemblies 403 above up along the mounting rails 301. After the last solar panel assembly 403 in each column has been slid into place along the mounting rails 301, a base stop (not shown) such as a lateral bar can be added to lock the solar panel assemblies 403 into place. Alternatively, the last solar panel assembly 403 can simply be fixated on the mounting rails 301 or on the roof 402 itself.

If one of the solar panels 203 should be damaged so as to be broken, for instance by a heavy object falling on it, the locking flanges 305 prevent the solar panel assembly 403 from falling down from the mounting rails 301 and possibly damaging the roof 402 below.

The mounting bar 101 can be made from a plastic material such as PVC (polyvinyl chloride), polyurethane, polypropylene, polyethene or GRP (glass-reinforced plastic, or fiberglass), but could also be made from EPDM rubber or a metal. The mounting rail 301 is preferably made from a metal such as aluminium to provide a stable and durable rail while also maintaining a low weight. Other materials could also be used, such as galvanized steel, stainless steel or powder coated and painted steel, for instance.

The invention is not to be seen as limited by the embodiments described herein, but can be varied within the scope of the appended claims. For instance, the mounting rails can have different configurations and shapes, as long as the mounting bar can be held in a secure and efficient manner and as long as the mounting bar itself can be secured to a roof or other structure below.

## Claims

1. An elongated solar panel mounting bar (101), comprising a longitudinal surface (106) between a first end (102) and a second end (104) of the elongated solar panel mounting bar (101),
wherein a first groove (103) in the longitudinal surface (106) extends diagonally from a position close to an upper extremity of the first end (102) towards a position close to a lower extremity of the second end (104), and the first groove (103) ends before the second end (104), **characterized in that** the first groove (103) opens into the first end (102), and
the second end (104) comprises a second groove (105) in the longitudinal surface (106) between said first groove (103) and the upper extremity of the second end (104), wherein the second groove (105) overlaps the first groove (103) and opens into the second end (104).

2. An elongated solar panel mounting bar (101) according to claim 1, wherein the longitudinal surface (106) of the elongated solar panel mounting bar (101) is an essentially planar surface.

3. An elongated solar panel mounting bar (101) according to claim 2, wherein the elongated solar panel mounting bar (101) comprises a quadratic cross-sectional profile.

4. An elongated solar panel mounting bar according to any of claims 1-3, further comprising an elongated solar panel mounting rail (301) for a solar panel, said elongated solar panel mounting rail comprising:
a base (302) configured to be attached to a plan surface,
a holding element (304) extending from the **base (302),** and configured to at least partly extend around a perimeter of a cross-section of an elongated solar panel mounting bar (101) according to any of claims 1 to 3, and allowing the elongated solar panel mounting bar (101) to slide-in from an end of the elongated solar panel mounting rail (301) and in a longitudinal direction of the elongated solar panel mounting rail (301).

5. An elongated solar panel mounting bar according to claim 4, wherein the elongated solar panel mounting rail (301) further comprises a middle section (303) protruding from the base (302), such that said middle section (303) connects said holding element (304) to said base (302).

6. An elongated solar panel mounting bar according to claim 5, wherein the middle section (303) comprises a quadratic profile.

7. An elongated solar panel mounting bar according to claim 5 or 6, wherein said middle section (303) is hollow.

8. An elongated solar panel mounting bar according to claim 7, wherein the quadratic hollow profile is configured for receiving a connection element provided for extending the elongated solar panel mounting rail (301) .

9. An elongated solar panel mounting bar according to claim 8, wherein the quadratic hollow profile is provided with an internal raised edge (308) and the connection element is an L-shaped bar, said internal raised edge (308) being configured for locking an L-shaped bar provided for extending the elongated solar panel mounting rail (301).

10. An elongated solar panel mounting bar according to claim 5, wherein the base (302) comprises a external raised edge (306), at a distance from the middle section (303) so that a channel (307) is formed between said external raised edge (306) and the middle section (303) .

11. An elongated solar panel mounting bar according to claim 4, wherein the holding element (304) is configured to extend at least partly around a quadratic mounting bar (101), the holding element (304) further comprising a locking flange (305) configured to lock the mounting bar (101) in a lateral direction of the elongated solar panel mounting rail (301).

12. System for mounting a solar panel comprising:
at least two elongated solar panel mounting bars (101), comprising a longitudinal surface (106) between a first end (102) and a second end (104) of the elongated solar panel mounting bar (101),
wherein a first groove (103) in the longitudinal surface (106) extends diagonally from a position close to an upper extremity of the first end (102) towards a position close to a lower extremity of the second end (104), and the first groove (103) opens into the first end (102) and ends before the second end (104), and
the second end (104) comprises a second groove (105) in the longitudinal surface (106) between said first groove (103) and the upper extremity of the second end (104), wherein the second groove (105) overlaps the first groove (103) and opens into the second end (104); and
at least two elongated solar panel mounting rails (301) for a solar panel, each mounting rail (301) comprising:
a base (302) configured to be attached to a plan surface,
a holding element (304) extending from the **base** (302), and configured to at least partly extend around a perimeter of a cross-section of the elongated solar panel mounting bar (101), and
allowing the elongated solar panel mounting bar (101) to slide-in from an end of the elongated solar panel mounting rail (301) and in a longitudinal direction of the elongated solar panel mounting rail (301).

13. System according to claim 12, wherein the first groove (103) of a first mounting bar (101) and the second groove (105) of a second mounting bar (101) are configured in such a way that an elongated groove (107) is created when placing the first mounting bar (101) adjacent to the second mounting bar (101) in a longitudinal direction, said elongated groove (107) comprising said first groove (103) of the first mounting bar (101) and said second groove (105) of the second mounting bar (101)

14. Method for mounting at least two solar panels, comprising:
mounting at least two elongated solar panel mounting rails (301) on a plane surface, at a predetermined distance, such that a column for solar panels is formed;
mounting each of the at least two solar panels in a corresponding first and a second elongated solar panel mounting bar (101) for a solar panel, forming at least two solar panel assemblies (403);
wherein each elongated solar panel mounting bar (101) comprises a longitudinal surface (106) between a first end (102) and a second end (104) of the elongated solar panel mounting bar (101), wherein a first groove (103) in the longitudinal surface (106) extends diagonally from a position close to an upper extremity of the first end (102) towards a position close to a lower extremity of the second end (104), and the first groove (103) opens into the first end (102) and ends before the second end (104), and the second end (104) comprises a second groove (105) in the longitudinal surface (106) between said first groove (103) and the upper extremity of the second end (104), wherein the second groove (105) overlaps the first groove (103) and opens into the second end (104); and
wherein each of the elongated solar panel mounting rails comprises a base (302) configured to be attached to a plan surface, and a holding element (304) extending from the base (302) and configured to at least partly extend around a perimeter of a cross-section of an elongated solar panel mounting bar (101), and allowing the elongated solar panel mounting bar (101) to slide-in from an end of the elongated solar panel mounting rail (301) and in a longitudinal direction of the elongated solar panel mounting rail (301);
slide in one of the at least two solar panel assemblies (403) onto the mounted at least two elongated solar panel mounting rails (301) from one end of the at least two elongated solar panel mounting rails (301); and
slide in the other of the at least two solar panel assemblies (403) into the at least two elongated solar panel mounting rails (301), such that one end of the solar panel of the other solar panel assembly (403) is inserted into a corresponding second groove (105) in the first and second elongated solar panel mounting bar (101) of the already mounted solar panel assembly (403), whereby the solar panels of the at least two solar panel assemblies (403) at least partly overlap each other.

## Patentansprüche

1. Längliche Montageschiene (101) für ein Solarpaneel, umfassend eine Längsfläche (106) zwischen einem ersten Ende (102) und einem zweiten Ende (104) der länglichen Montageschiene (101) für ein Solarpaneel,
wobei eine erste Rille (103) in der Längsfläche (106) sich diagonal von einer Position nahe einem oberen äußersten Ende des ersten Endes (102) zu einer Position nahe einem unteren äußersten Ende des zweiten Endes (104) erstreckt und die erste Rille (103) vor dem zweiten Ende (104) endet, **dadurch gekennzeichnet, dass** die erste Rille (103) sich in das erste Ende (102) öffnet, und
das zweite Ende (104) eine zweite Rille (105) in der Längsfläche (106) zwischen der ersten Rille (103) und dem oberen äußersten Ende des zweiten Endes (104) umfasst, wobei die zweite Rille (105) die erste Rille (103) überlappt und sich in das zweite Ende (104) öffnet.

2. Längliche Montageschiene (101) für ein Solarpaneel nach Anspruch 1, wobei die Längsfläche (106) der länglichen Montageschiene (101) für ein Solarpaneel eine im Wesentlichen ebene Oberfläche ist.

3. Längliche Montageschiene (101) für ein Solarpaneel nach Anspruch 2, wobei die längliche Montageschiene (101) für ein Solarpaneel ein quadratisches Querschnittsprofil umfasst.

4. Längliche Montageschiene für ein Solarpaneel nach einem der Ansprüche 1-3, weiter umfassend eine längliche Befestigungsschiene (301) für ein Solarpaneel, wobei die längliche Befestigungsschiene für ein Solarpaneel umfasst:
eine Basis (302), die konfiguriert ist, an einer ebenen Oberfläche befestigt zu werden,
ein Halterungselement (304), das sich von der **Basis (302)** erstreckt und konfiguriert ist, sich mindestens teilweise um einen Umfang eines Querschnitts einer länglichen Montageschiene (101) für ein Solarpaneel nach einem der Ansprüche 1 bis 3 zu erstrecken und der länglichen Montageschiene (101) für ein Solarpaneel zu erlauben, von einem Ende der länglichen Befestigungsschiene (301) für ein Solarpaneel und in einer Längsrichtung der länglichen Befestigungsschiene (301) für ein Solarpaneel eingeschoben zu werden.

5. Längliche Montageschiene für ein Solarpaneel nach Anspruch 4, wobei die längliche Befestigungsschiene (301) für ein Solarpaneel weiter einen Mittelabschnitt (303) umfasst, der von der Basis (302) vorragt, sodass der Mittelabschnitt (303) das Halterungselement (304) mit der Basis (302) verbindet.

6. Längliche Montageschiene für ein Solarpaneel nach Anspruch 5, wobei der Mittelabschnitt (303) ein quadratisches Profil umfasst.

7. Längliche Montageschiene für ein Solarpaneel nach Anspruch 5 oder 6, wobei der Mittelabschnitt (303) hohl ist.

8. Längliche Montageschiene für ein Solarpaneel nach Anspruch 7, wobei das quadratische Hohlprofil konfiguriert ist, ein Verbindungselement aufzunehmen, das zum Verlängern der länglichen Befestigungsschiene (301) für ein Solarpaneel konfiguriert ist.

9. Längliche Montageschiene für ein Solarpaneel nach Anspruch 8, wobei das quadratische Hohlprofil mit einer inneren erhabenen Kante (308) bereitgestellt ist und das Verbindungselement eine L-förmige Schiene ist, wobei die innere erhabene Kante (308) konfiguriert ist, eine L-förmige Schiene zu verriegeln, die zum Erweitern der länglichen Befestigungsschiene (301) für ein Solarpaneel bereitgestellt ist.

10. Längliche Montageschiene für ein Solarpaneel nach Anspruch 5, wobei die Basis (302) eine äußere erhabene Kante (306) mit Abstand vom Mittelabschnitt (303) umfasst, sodass ein Kanal (307) zwischen der äußeren erhabenen Kante (306) und dem Mittelabschnitt (303) gebildet ist.

11. Längliche Montageschiene für ein Solarpaneel nach Anspruch 4, wobei das Halterungselement (304) konfiguriert ist, sich zumindest um eine quadratische Montageschiene (101) zu erstrecken, wobei das Halterungselement (304) weiter einen Verriegelungsflansch (305) umfasst, der konfiguriert ist, die Montageschiene (101) in einer seitlichen Richtung der länglichen Befestigungsschiene (301) für ein Solarpaneel zu verriegeln.

12. System zum Montieren eines Solarpaneels, umfassend:
mindestens zwei längliche Montageschienen (101) für ein Solarpaneel, umfassend eine Längsfläche (106) zwischen einem ersten Ende (102) und einem zweiten Ende (104) der länglichen Montageschiene (101) für ein Solarpaneel,
wobei eine erste Rille (103) in der Längsfläche (106) sich diagonal von einer Position nahe einem oberen äußersten Ende des ersten Endes (102) zu einer Position nahe einem unteren äußersten Ende des zweiten Endes (104) erstreckt und die erste Rille (103) sich in das erste Ende (102) öffnet und vor dem zweiten Ende (104) endet, und
das zweite Ende (104) eine zweite Rille (105) in der Längsfläche (106) zwischen der ersten Rille (103) und dem oberen äußersten Ende des zweiten Endes (104) umfasst, wobei die zweite Rille (105) die erste Rille (103) überlappt und sich in das zweite Ende (104) öffnet; und
mindestens zwei längliche Befestigungsschienen (301) für ein Solarpaneel, jede Befestigungsschiene (301) umfassend:
eine Basis (302), die konfiguriert ist, an einer ebenen Oberfläche befestigt zu werden,
ein Halterungselement (304), das sich von der **Basis** (302) erstreckt und konfiguriert ist, sich mindestens teilweise um einen Umfang eines Querschnitts der länglichen Montageschiene (101) für ein Solarpaneel zu erstrecken und der länglichen Montageschiene (101) für ein Solarpaneel zu erlauben, von einem Ende der länglichen Befestigungsschiene (301) für ein Solarpaneel und in einer Längsrichtung der länglichen Befestigungsschiene (301) für ein Solarpaneel eingeschoben zu werden.

13. System nach Anspruch 12, wobei die erste Rille (103) einer ersten Montageschiene (101) und die zweite Rille (105) einer zweiten Montageschiene (101) so konfiguriert sind, dass eine längliche Rille (107) erzeugt wird, wenn die erste Montageschiene (101) neben der zweiten Montageschiene (101) in einer Längsrichtung angeordnet wird, wobei die längliche Rille (107) die erste Rille (103) der ersten Montageschiene (101) und die zweite Rille (105) der zweiten Montageschiene (101) umfasst.

14. Verfahren zum Montieren von mindestens zwei Solarpaneelen, umfassend:
Montieren von mindestens zwei länglichen Befestigungsschienen (301) für ein Solarpaneel auf einer ebenen Fläche mit einem vorbestimmten Abstand, sodass eine Säule für Solarpaneele gebildet wird;
Montieren jedes der mindestens zwei Solarpaneele in einer entsprechenden ersten und einer zweiten länglichen Montageschiene (101) für ein Solarpaneel, wodurch mindestens zwei Solarpaneelanordnungen (403) gebildet werden;
wobei jede längliche Montageschiene (101) für ein Solarpaneel eine Längsfläche (106) zwischen einem ersten Ende (102) und einem zweiten Ende (104) der länglichen Montageschiene (101) für ein Solarpaneel umfasst, wobei eine erste Rille (103) in der Längsfläche (106) sich diagonal von einer Position nahe einem oberen äußersten Ende des ersten Endes (102) zu einer Position nahe einem unteren äußersten Ende des zweiten Endes (104) erstreckt und die erste Rille (103) sich in das erste Ende (102) öffnet und vor dem zweiten Ende (104) endet, und das zweite Ende (104) eine zweite Rille (105) in der Längsfläche (106) zwischen der ersten Rille (103) und dem oberen äußersten Ende des zweiten Endes (104) umfasst, wobei die zweite Rille (105) die erste Rille (103) überlappt und sich in das zweite Ende (104) öffnet; und
wobei jede der länglichen Befestigungsschienen für ein Solarpaneel eine Basis (302), die konfiguriert ist, an einer ebenen Oberfläche befestigt zu werden, und ein Halterungselement (304) umfasst, das sich von der Basis (302) erstreckt und konfiguriert ist, sich mindestens teilweise um einen Umfang eines Querschnitts einer länglichen Montageschiene (101) für ein Solarpaneel zu erstrecken und der länglichen Montageschiene (101) für ein Solarpaneel zu erlauben, von einem Ende der länglichen Befestigungsschiene (301) für ein Solarpaneel und in einer Längsrichtung der länglichen Befestigungsschiene (301) für ein Solarpaneel eingeschoben zu werden;
Einschieben einer der mindestens zwei Solarpaneelanordnungen (403) auf die montierten mindestens zwei länglichen Befestigungsschienen (301) für ein Solarpaneel von einem Ende der mindestens zwei länglichen Befestigungsschienen (301) für ein Solarpaneel; und
Einschieben der anderen der mindestens zwei Solarpaneelanordnungen (403) in die mindestens zwei länglichen Befestigungsschienen (301) für ein Solarpaneel, sodass ein Ende des Solarpaneels der anderen Solarpaneelanordnung (403) in eine entsprechende zweite Rille (105) in der ersten und zweiten länglichen Montageschiene (101) für ein Solarpaneel der bereits montierten Solarpaneelanordnung (403) eingesetzt wird, wodurch die Solarpaneele der mindestens zwei Solarpaneelanordnungen (403) einander zumindest teilweise überlappen.

## Revendications

1. Barre de montage de panneau solaire allongé (101), comprenant une surface longitudinale (106) entre une première fin (102) et une seconde fin (104) de la barre de montage du panneau solaire allongé (101),
dans laquelle une première rainure (103) dans la surface longitudinale (106) s'étend diagonale depuis une position proche d'une extrémité supérieure de la première fin (102) vers une position proche d'une extrémité inférieure de la seconde fin (104), et la première rainure (103) se termine avant la seconde fin (104), **caractérisée en ce que** la première rainure (103) s'ouvre dans la première fin (102), et
la seconde fin (104) comprend une seconde rainure (105) dans la surface longitudinale (106) entre ladite première rainure (103) et l'extrémité supérieure de la seconde fin (104), dans laquelle la seconde rainure (105) chevauche la première rainure (103) et s'ouvre dans la seconde fin (104).

2. Barre de montage de panneau solaire allongé (101) selon la revendication 1, dans laquelle la surface longitudinale (106) de la barre de montage de panneau solaire allongé (101) est une surface essentiellement plane.

3. Barre de montage de panneau solaire allongé (101) selon la revendication 2, dans laquelle la barre de montage de panneau solaire allongé (101) comprend un profil transversal quadratique.

4. Barre de montage de panneau solaire allongé selon l'une quelconque des revendications 1-3, comprenant en outre un rail de montage de panneau solaire allongé (301) pour un panneau solaire, ledit rail de montage de panneau solaire allongé comprenant :
une base (302) configurée pour être fixée à une surface plane,
un élément de support (304) s'étendant depuis la **base (302),** et configuré pour au moins en partie s'étendre autour d'un périmètre d'une section transversale d'une barre de montage de panneau solaire allongé (101) selon l'une quelconque des revendications 1 à 3, et permettant à la barre de montage de panneau solaire allongé (101) de coulisser depuis une extrémité du rail de montage de panneau solaire allongé (301) et dans une direction longitudinale du rail de montage de panneau solaire allongé (301).

5. Barre de montage de panneau solaire allongé selon la revendication 4, dans laquelle le rail de montage de panneau solaire allongé (301) comprend en outre une section centrale (303) faisant saillie depuis la base (302), de telle sorte que ladite section centrale (303) relie ledit élément de support (304) à ladite base (302).

6. Barre de montage de panneau solaire allongé selon la revendication 5, dans laquelle la section centrale (303) comprend un profil quadratique.

7. Barre de montage de panneau solaire allongé selon la revendication 5 ou 6, dans laquelle ladite section centrale (303) est creuse.

8. Barre de montage de panneau solaire allongé selon la revendication 7, dans laquelle le profil creux quadratique est configuré pour recevoir un élément de liaison prévu pour étendre le rail de montage de panneau solaire allongé (301).

9. Barre de montage de panneau solaire allongé selon la revendication 8, dans laquelle le profil creux quadratique est doté d'un bord surélevé interne (308) et l'élément de liaison est une barre en forme de L, ledit bord surélevé interne (308) étant configuré pour verrouiller une barre en forme de L prévue pour étendre le rail de montage de panneau solaire allongé (301).

10. Barre de montage de panneau solaire allongé selon la revendication 5, dans laquelle la base (302) comprend un bord surélevé externe (306), à une distance de la section centrale (303) de telle sorte qu'un canal (307) est formé entre ledit bord surélevé externe (306) et la section centrale (303).

11. Barre de montage de panneau solaire allongé selon la revendication 4, dans laquelle l'élément de support (304) est configuré pour s'étendre au moins en partie autour d'une barre de montage quadratique (101), l'élément de support (304) comprenant en outre une bride de verrouillage (305) configurée pour verrouiller la barre de montage (101) dans une direction latérale du rail de montage de panneau solaire allongé (301).

12. Système de montage d'un panneau solaire comprenant :
au moins deux barres de montage de panneau solaire allongé (101), comprenant une surface longitudinale (106) entre une première fin (102) et une seconde fin (104) de la barre de montage de panneau solaire allongé (101),
dans lequel une première rainure (103) dans la surface longitudinale (106) s'étend en diagonale depuis une position proche d'une extrémité supérieure de la première fin (102) vers une position proche d'une extrémité inférieure de la seconde fin (104), et la première rainure (103) s'ouvre dans la première fin (102) et se termine avant la seconde fin (104), et
la seconde fin (104) comprend une seconde rainure (105) dans la surface longitudinale (106) entre ladite première rainure (103) et l'extrémité supérieure de la seconde fin (104), dans laquelle la seconde rainure (105) chevauche la première rainure (103) et s'ouvre dans la seconde fin (104) ; et
au moins deux rails de montage de panneau solaire allongé (301) pour un panneau solaire, chaque rail de montage (301) comprenant :
une base (302) configurée pour être fixée à une surface plane,
un élément de support (304) s'étendant depuis la **base** (302), et configuré pour au moins en partie s'étendre autour d'un périmètre d'une section transversale de la barre de montage de panneau solaire allongé (101), et permettant à la barre de montage de panneau solaire allongé (101) de coulisser depuis une extrémité du rail de montage de panneau solaire allongé (301) et dans une direction longitudinale du rail de montage de panneau solaire allongé (301).

13. Système selon la revendication 12, dans lequel la première rainure (103) d'une première barre de montage (101) et la seconde rainure (105) d'une seconde barre de montage (101) sont configurées de telle sorte qu'une rainure allongée (107) est créée en plaçant la première barre de montage (101) adjacente à la seconde barre de montage (101) dans une direction longitudinale, ladite rainure allongée (107) comprenant ladite première rainure (103) de la première barre de montage (101) et ladite seconde rainure (105) de la seconde barre de montage (101).

14. Procédé de montage d'au moins deux panneaux solaires, comprenant :
le montage d'au moins deux rails de montage de panneau solaire allongé (301) sur une surface plane, à une distance prédéterminée, de telle sorte qu'une colonne pour panneaux solaires est formée ;
le montage de chacun des au moins deux panneaux solaires dans une première et une seconde barre de montage de panneau solaire allongé correspondante (101) pour un panneau solaire, formant au moins deux ensembles panneau solaire (403) ;
dans lequel chaque barre de montage de panneau solaire allongé (101) comprend une surface longitudinale (106) entre une première fin (102) et une seconde fin (104) de la barre de montage de panneau solaire allongé (101), dans lequel une première rainure (103) dans la surface longitudinale (106) s'étend en diagonale depuis une position proche d'une extrémité supérieure de la première fin (102) vers une position proche d'une extrémité inférieure de la seconde fin (104), et la première rainure (103) s'ouvre dans la première fin (102) et se termine avant la seconde fin (104), et la seconde fin (104) comprend une seconde rainure (105) dans la surface longitudinale (106) entre ladite première rainure (103) et l'extrémité supérieure de la seconde fin (104), dans lequel la seconde rainure (105) chevauche la première rainure (103) et s'ouvre dans la seconde fin (104) ; et
dans lequel chacun des rails de montage de panneau solaire allongé comprend une base (302) configurée pour être fixée à une surface plane, et un élément de support (304) s'étendant depuis la base (302) et configuré pour au moins en partie s'étendre autour d'un périmètre d'une section transversale d'une barre de montage de panneau solaire allongé (101), et permettant à la barre de montage de panneau solaire allongé (101) de coulisser depuis une extrémité du rail de montage de panneau solaire allongé (301) et dans une direction longitudinale du rail de montage de panneau solaire allongé (301) ;
coulisser dans l'un des au moins deux ensembles panneau solaire (403) sur les au moins deux rails de montage de panneau solaire allongé (301) montés depuis une extrémité des au moins deux rails de montage de panneau solaire allongé (301), et
coulisser dans l'autre des au moins deux ensembles panneau solaire (403) dans les au moins deux rails de montage de panneau solaire allongé (301), de telle sorte qu'une extrémité du panneau solaire de l'autre ensemble panneau solaire (403) est insérée dans une seconde rainure correspondante (105) dans les première et seconde barres de montage de panneau solaire allongé (101) de l'ensemble panneau solaire (403) déjà monté, moyennant quoi les panneaux solaires des au moins deux ensembles panneau solaire (403) se chevauchent au moins en partie l'un avec l'autre.
